# EUROPEAN PATENT SPECIFICATION

(11) **EP 4 621 578 B1**
(45) Date of publication and mention of the grant of the patent: **07.10.2026**
(21) Application number: 24382306.9
(22) Date of filing: 20.03.2024
(51) Int. Cl.: G06F 12/0862

(54) **PREFETCHING MEMORY BLOCKS**
VORAUSLADEN VON SPEICHERBLÖCKEN
PRÉEXTRACTION DE BLOCS DE MÉMOIRE

(43) Date of publication of application: 24.09.2025
(73) Proprietor: Semidynamics Technology Services, S.L., 08021 Barcelona (ES)
(72) Inventor: ESPASA SANS, Roger, 08021 BARCELONA (ES); ARNAU MONTAÑÉS, José María, 12005 CASTELLÓN DE LA PLANA (ES)
(74) Representative: ZBM Patents - Zea, Barlocci & Markvardsen

(56) References cited:
- US-A1- 2004 260 908
- US-A1- 2010 153 654
- US-A1- 2020 034 061

## Description

This disclosure relates to prefetch methods, and to computer programs and prefetch engines suitable to perform such prefetch methods.

### BACKGROUND

Over the last decades, processor speed has improved at a much faster pace than memory speed. This created a problem known as the memory wall: as processors are much faster than memories, they can stay idle for long periods waiting for the memory to provide the data, significantly impacting performance. To hide the memory latency and avoid the memory wall, prefetching techniques are used in modern processors. Prefetching techniques aim to retrieve data from memory in advance, so by the time it is requested by the processor it is already available in caches such as, e.g., local on-chip caches.

Prefetching techniques can be hardware-based or software-based. Hardware prefetchers analyse the stream of cache misses and try to predict the addresses of future memory accesses. Although hardware prefetching does not require programmer intervention, it may incorrectly prefetch data, bring data that is not needed by the processor, etc. To overcome this issue with prefetching accuracy, software prefetching techniques can be used. In software prefetching, the programmer explicitly introduces prefetch instructions in the program. As programmers know which data will be accessed by their applications, software prefetching can be much more accurate.

An object of the disclosure is to provide new methods, prefetch engines and computer programs aimed at improving current ways of prefetching memory blocks in a processor system.

### SUMMARY

In a first aspect, methods are provided of prefetching memory blocks in a processor system comprising a processor and a memory including a main memory, a cache memory and a prefetch engine (or prefetcher) implementing prefetching rules. In this processor system, two types of memory access requests are executable at the memory: a low-priority type including multi-prefetch requests and a high-priority type corresponding to memory access requests other than the multi-prefetch requests. These methods (also denominated prefetch methods herein) comprise receiving, by the prefetch engine according to the prefetching rules, a multi-prefetch request of the low-priority type defining a one-dimensional (1D) or two-dimensional (2D) region of memory blocks in the main memory. Such prefetch methods further comprise verifying or detecting, by the prefetch engine according to the prefetching rules, whether or that the cache memory is in idle state. Idle state refers to that no memory access request of the high-priority type is being executed or waiting to be executed. Non-idle state refers to that some memory access request of the high-priority type is being executed or waiting to be executed. If the cache memory is in the idle state, the prefetch engine triggers, according to the prefetching rules, performance of a prefetch burst by instructing a controller of the cache memory to individually prefetch the memory blocks forming the 1D or 2D region as defined in the received multi-prefetch request.

Such new prefetch methods proposed herein are based on a new type of prefetch sentence includable in computer programs. This prefetch sentence defines a 1D or 2D region of memory blocks in main memory to be massively prefetched via execution of the new prefetch sentence or request. This massive prefetching defined by said new type of prefetch sentence/request is performed in such a way that at least some interferences with memory access requests of the high-priority type are prevented. This avoidance of interferences improves general performance of computer systems where new prefetch methods operate.

Memory access requests executable or processable at the memory are conceptually classified into a low-priority type of memory access requests including multi-prefetch requests and a high-priority type of memory access requests corresponding to memory access requests other than the multi-prefetch requests. The prefetch burst instructed to the cache controller includes instructing to the cache controller multiple or various prefetch requests, i.e., one request for each of the memory blocks (in the 1D or 2D region) to be prefetched. The expression "multi-prefetch requests" is used herein to refer to the innovative memory access requests proposed in present disclosure in the sense that each of said "multi-prefetch requests" corresponds to multiple or various prefetches or, in other words, to a burst of prefetches.

The high priority memory access requests may include, e.g., application memory requests from memory access instructions (i.e. loads/stores), other type of prefetch requests (from standard prefetch instructions that request one memory block), cache management operations, atomic memory operations or other synchronization requests such as memory fences.

As commented before, the new type of massive or multi- prefetch sentences/requests are defined as low-priority requests and memory access requests that are not multi-prefetch requests are classified as high-priority requests. Prefetch methods proposed herein handle both types of (low-priority and high-priority) requests separately in such a manner that execution of high-priority requests is prioritized over execution of low-priority (massive) requests. Benefits and advantages of said manner of handling novel massive requests and high-priority requests are clear, mainly from performance perspective, in comparison to prior art prefetching methods which do not implement the prioritization of the new prefetching methods according to present disclosure.

In some examples, prefetch methods may further comprise, in case that the cache memory (or controller thereof) is in the non-idle state, delaying the performing of the prefetch burst by the prefetch engine (or prefetcher) according to the prefetching rules. This delay of the prefetch burst because the cache is in non-idle state further improves general performance of processor systems where new prefetch methods operate, since processing of low-priority (massive) requests and processing of high-priority requests do not coexist at same time or simultaneously.

According to implementations, prefetch methods may further comprise verifying or detecting, by the prefetch engine according to the prefetching rules, whether the cache memory transitions (from the non-idle state) to the idle state while the performing of the prefetch burst remains delayed and, in said case, triggering the delayed performing of the prefetch burst. With this feature of triggering the delayed prefetch burst when the cache transitions to idle state, novel high-priority multi-prefetch requests (proposed herein) are processable with further improved performance because their processing do not interfere with processing of high-priority memory access requests.

In some configurations, prefetch methods may further comprise verifying or detecting, by the prefetch engine according to the prefetching rules, whether the cache memory transitions (from the idle state) to the non-idle state during the performing of the prefetch burst and, in said case, interrupting the performing of the prefetch burst. This interruption of the prefetch burst because the cache memory transitions to non-idle state permits avoiding the (low-priority) prefetch burst to interfere with high-priority memory access requests and, therefore, overall performance of the processor system is even more improved.

In examples, prefetch methods may further comprise verifying or detecting, by the prefetch engine according to the prefetching rules, whether the cache memory transitions (from the non-idle state) to the idle state while the performing of the prefetch burst remains interrupted and, in said case, resuming the interrupted performing of the prefetch burst. Such a resuming of the interrupted prefetch burst permits its retarded continuation in such a manner that remaining (low-priority) individual prefetches may be processed without interleaving with high-priority memory access requests and, therefore, performance of the processor system is still further improved.

In some implementations, prefetch methods may further comprise enqueuing, by the prefetch engine (or prefetcher) according to the prefetching rules, the received multi-prefetch request into a queue of multi-prefetch requests in which the received multi-prefetch request remains stored until it is released or dequeued according to a release policy implemented at/by the queue. This release policy may be or may include a FIFO queue policy, or a LIFO queue policy, or a circular buffer policy, or a double-ended queue policy, or a priority queue policy, or any combination thereof.

According to some examples, the multi-prefetch requests may further define a prefetch-type parameter indicating multi-prefetch in shared state or in exclusive state in such a manner that the controller of the cache memory may be instructed, by the prefetch engine according to the prefetching rules, to individually prefetch the memory blocks in shared state or in exclusive state as defined by the prefetch-type parameter. Shared state permits concurrent read-only operations with no affectation to memory consistency, and exclusive state allows update operations in such a manner that memory coherence is preserved.

In some configurations, the multi-prefetch requests may further define a stride parameter indicating whether the multi-prefetch is strided and with which stride magnitude in such a manner that the controller of the cache memory may be instructed, by the prefetch engine according to the prefetching rules, to individually prefetch the memory blocks strided or non-strided and, in case of strided, with which stride magnitude, as defined by the stride parameter.

In exemplary prefetch methods, the instructing of the controller of the cache memory may include instructing, by the prefetch engine (or prefetcher) according to the prefetching rules, the cache controller to individually prefetch the memory blocks in L1 cache included in the cache memory.

In examples, the prefetching rules governing the prefetch engine's functional behaviour or logic may be implemented by or through a Finite State Machine (FSM). In modular prefetchers with prefetching rules logically implemented by/through FSM, different modules constituting the prefetcher may implement different parts of the FSM and/or may cooperate to globally implement the FSM.

In accordance with some implementations, the multi-prefetch requests may have a RISC-V R-type format with two source registers and one destination register. The two source registers may be both used by the multi-prefetch requests to define parameters thereof. A first of the two source registers may be used to encode a memory address of an initial memory block of the 1D or 2D region, and a second of the two source registers may be used to encode a horizontal count, a vertical count and a stride magnitude. This content of the two source registers may permit defining the 1D region of memory blocks by the memory address of the initial memory block and one of the horizontal and vertical counts (single count for single dimension of the 1D region) and, also, the 2D region of memory blocks by the memory address of the initial memory block and the horizontal count and the vertical count (one count for each of the two dimensions of the 2D region).

Pre-existing formats other than RISC-V R-type format may be also used to define innovative multi-prefetch requests according to present disclosure such as, e.g., ARM instruction format. Said use of preexisting formats has clear advantages mainly from reusability perspective and, therefore, in terms of efficiency because advantage of already existing resources may be taken.

In a further aspect, computer programs are provided comprising program instructions for causing a prefetch engine to perform any of the prefetch methods disclosed herein. Said computer programs (also denominated prefetch computer programs herein) may be embodied on a storage medium and/or carried on a carrier signal. Prefetch computer programs are suitable for performing prefetch methods such as those described in other parts of the disclosure. Hence, aspects of said prefetch methods such as, e.g., functional, structural, advantageous considerations, may be similarly attributable to prefetch computer programs.

In a still further aspect, a prefetch engine (or prefetcher) is provided for prefetching memory blocks in a processor system comprising a processor and a memory including a main memory, a cache memory and the prefetch engine which implements prefetching rules. Two types of memory access requests are executable at the memory: a low-priority type including multi-prefetch requests and a high-priority type corresponding to memory access requests other than the multi-prefetch requests. These prefetch engines comprise a receiving module, a verifying module, and a triggering module.

The receiving module is configured to receive, according to the prefetching rules, a multi-prefetch request of the low-priority type defining a one-dimensional, 1D, or two-dimensional, 2D, region of memory blocks in the main memory.

The verifying module is configured to verify, according to the prefetching rules, whether or that the cache memory is in idle state. Idle state refers to that no memory access request of the high-priority type is being executed or waiting to be executed. Non-idle state refers to that some memory access request of the high-priority type is being executed or waiting to be executed.

The triggering module is configured in such a manner that, if the cache memory is in the idle state, performance of a prefetch burst is triggered according to the prefetching rules, said performing of the prefetch burst including instructing a controller of the cache memory to individually prefetch the memory blocks forming the 1D or 2D region as defined in the received multi-prefetch request.

These prefetch engines (or prefetchers) are suitable for performing prefetch methods such as those described in other parts of the disclosure. Hence, aspects of said prefetch methods such as, e.g., functional, structural, advantageous considerations, may be similarly attributable to prefetch engines.

### BRIEF DESCRIPTION OF THE DRAWINGS

Non-limiting examples of present disclosure will be described in the following, with reference to the appended drawings, in which:
Figure 1 is a block diagram schematically illustrating prefetch engines according to examples.
Figure 2 is a block diagram schematically illustrating prefetch engines according to examples within a memory-related operational environment.
Figure 3 is a flow chart schematically illustrating prefetch methods according to examples.
Figure 4 is a flow chart schematically illustrating prefetch methods according to further examples.

### DETAILED DESCRIPTION OF EXAMPLES

In these figures, same reference numbers may have been used to designate same or similar elements.

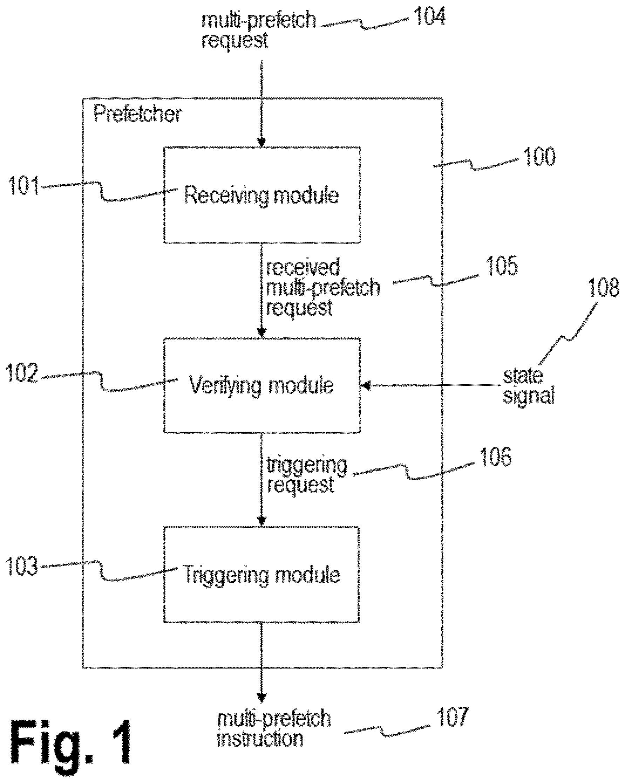

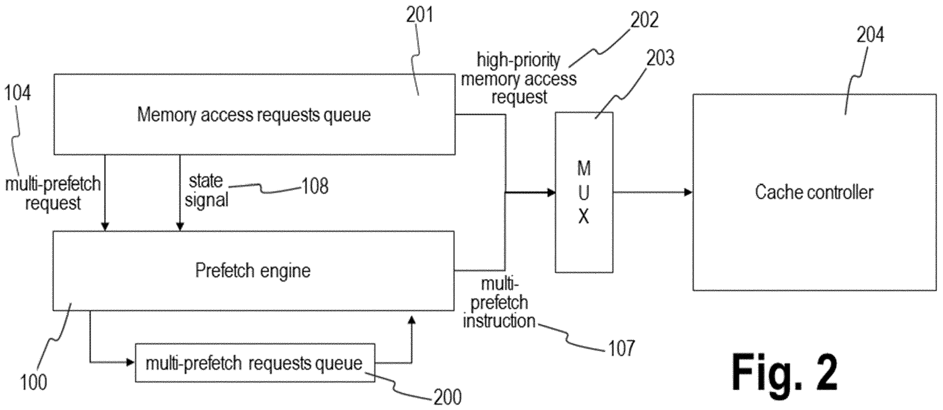

Figure 1 is a block diagram schematically illustrating prefetch engines according to examples. Prefetch engines 100 may be included and, therefore, operate in a processor system comprising a processor and a memory including a main memory and a cache memory as it will be described with reference to Figure 2. The memory may receive and accordingly process memory access requests belonging to either low-priority type or high-priority type, said types being mutually exclusive. The low-priority type refers to multi-prefetch requests and the high-priority type refers to any other type of memory access requests different from the multi-prefetch requests. Prefetch engines 100 may implement prefetching rules which make the prefetch engine 100 to functionally behave or perform as deeply disclosed herein. Prefetch engines 100 may comprise a receiving module 101, a verifying module 102 and a triggering module 103.

The receiving module 101 may be configured (according to the prefetching rules) to receive or capture a multi-prefetch request 104 of the low-priority type, said request 104 defining a one-dimensional (1D) or two-dimensional (2D) portion or region of the main memory formed by memory blocks. This receiving module 101 may be continuously attentive to reception of multi-prefetch requests 104, which may be enqueued as they are received in a queue of multi-prefetch requests (not shown in Figure 1), where said requests 104 may remain until their individual dequeuing and subsequent processing as explained below.

The verifying module 102 may be configured (according to the prefetching rules) to verify whether or that the cache memory is in idle state. The concepts of idle state and the contrary (i.e., non-idle state) are defined in other parts of present disclosure. The verifying module 102 may determine whether or that the cache memory is in the idle state (or the contrary) by receiving and checking state signal 108 from (e.g., a controller of) the cache memory denoting such an idle state (or the contrary: non-idle state).

Reception of the state signal 108 denoting idle state by the verifying module 102 means that said module 102 is notified and, therefore, knows that the cache memory is not processing memory access requests of the high-priority type. Such an idle state may remain as such until another state signal 108 denoting non-idle state is received by the verifying module 102. Time elapsed between state signal 108 indicating idle state and subsequent state signal 108 indicating non-idle state may represent an opportunity time window during which multi-prefetch requests of the low-priority type may be processed without interfering with memory access requests of the high-priority type.

Similarly, time elapsed between state signal 108 indicating non-idle state and subsequent state signal 108 indicating idle state may represent a "prohibited" time window during which processing of multi-prefetch requests of the low-priority type is avoided in order to prevent interferences with memory access requests of the high-priority type.

The verifying module 102 may obtain the received multi-prefetch request 105 from the receiving module 101 either directly or indirectly. An indirect manner of implementing said obtaining may include enqueuing, by the receiving module 101, the received multi-prefetch request 105 into queue of multi-prefetch requests (not shown in Figure 1). The memory access requests of the high-priority type may be enqueued into another queue of high-priority memory access requests, such that high-priority requests and low-priority requests may wait to be processed in different queues. This may permit proper handling of high-priority requests and low-priority requests separately and, hence, avoiding interferences between their processing by giving top priority to execution of high-priority requests over low-priority requests.

If or when the cache is in or transitions to the idle state, which may be known by the verifying module 102 through successively received state signals 108, multi-prefetch request 105 may be dequeued from the queue of multi-prefetch requests, for its subsequent processing, according to release policy implemented at/by said queue. Said release policy may be or may include a FIFO queue policy, or a LIFO queue policy, or a circular buffer policy, or a double-ended queue policy, or a priority queue policy, or any combination thereof. FIFO policy, which means that oldest multi-prefetch request in the queue is released first, may be mainly used in prefetch methods according to present disclosure, but any other of the mentioned policies may be considered depending on (prevailing) technical and/or functional requirements in each case.

Upon determination, by the verifying module 102, that multi-prefetch requests of the low-priority type may be processed because the cache memory is in the idle state, the verifying module 102 may output a triggering request 106. The triggering module 103 may be configured (according to the prefetching rules) to receive and process such a triggering request 106.

This triggering request 106 may include data instructing the triggering module 103 to trigger performance of prefetch burst to individually prefetch the memory blocks forming the 1D or 2D region, as defined in the multi-prefetch request 105. Such an information about which memory blocks are to be individually prefetched may be included in the triggering request 106 or, alternatively, may be obtained by the triggering module 103 from the multi-prefetch request 105 dequeued or released from the queue of multi-prefetch requests according to dequeue or release policy.

The triggering module 103 may then output or provide multi-prefetch instruction 107 to cache controller, said instruction 107 instructing the cache to individually prefetch the memory blocks forming the 1D or 2D region as defined in the dequeued multi-prefetch request 105 and/or in the triggering request 106 outputted by the verifying module 102.

If the verifying module 102 determines, from received state signal or signals 108, that the cache memory is in the non-idle state (i.e., high-priority memory access requests are being processed), the performing of the prefetch burst may be delayed until it is determined, by the verifying module 102, that the cache memory has transitioned to idle state. Upon detection of said transition to idle state through state signal or signals 108, the previously delayed prefetch burst may be triggered because no high-priority memory access requests are being executed. These operations of delaying due to non-idle state and subsequent triggering due to transition to idle state may be implemented in different manners.

In some examples, such a delaying may be instructed to the triggering module 103 through the triggering request 106 in such a manner that the performing of the prefetch burst may remain pending to be processed in the triggering module 103 until it is notified by the verifying module 102 that the cache has transitioned to idle state, in which case the delayed performing of the prefetch burst may be (immediately) triggered.

In other examples, such a delaying may not be notified to the triggering module 103, but the performing of the prefetch burst may remain pending to be processed in the verifying module 102 until it determines that the cache has transitioned to idle state, in which case the verifying module 102 may generate triggering request 106 to instruct the triggering module 103 to (immediately) trigger the delayed performing of the prefetch burst.

If it is detected, by the verifying module 102, transition of the cache (from idle state) to non-idle state and the triggered prefetch burst is being performed or is being instructed to the cache memory, such a performing or instructing of the prefetch burst may be interrupted. This may be implemented based on, e.g., a notification from the verifying module 102 to the triggering module 103 indicating the detected transition to non-idle state. Then, the triggering module 103, upon reception of said notification, may (immediately) check whether the performing or instructing of the prefetch burst is in progress and, in said case, may interrupt it. This interruption may be implemented by the triggering module 103 by interrupting the instructing of the individual prefetches to the cache or by instructing the cache memory (or a controller thereof) to cancel individual prefetches still not processed at the cache.

Once the prefetch burst is interrupted, data on said interruption and on prefetches pending to be processed may be kept at the triggering module 103 until reception of pertinent notification, from verifying module 102, indicating transition by the cache to idle state. Then, the triggering module 103 may (immediately) resume the previously interrupted performing of the prefetch burst. This resuming may be implemented based on generating, by the triggering module 103, multi-prefetch instruction 107 instructing the cache memory (or controller thereof) to perform the prefetches that are pending to be processed from the data on interruption and pending prefetches previously kept at the triggering module 103.

Multi-prefetch requests 104, 105 according to present disclosure may define at least some of following parameters:
- Memory address of initial memory block of the 1D or 2D region to be prefetched.
- One count to define the 1D region's size starting from the memory address of the initial memory block (single count for single dimension of the 1D region).
- Two counts to define the 2D region's size starting from the memory address of the initial memory block (one count for each of the two dimensions of the 2D region).
- Prefetch-type parameter indicating whether the multi-prefetch is to be performed in shared state or in exclusive state.
- Stride parameter indicating whether the multi-prefetch is to be performed strided and with which stride magnitude.

Multi-prefetch requests 104, 105 may have a RISC-V R-type format or any other pre-existing format suitable for memory access instructions/requests discussed herein. For example, multi-prefetch requests 104, 105 may have an ARM instruction format. In the particular case of RISC-V R-type format, the two source registers of said format may be reused by multi-prefetch requests 104, 105. One of said source registers may be used to encode the (aforementioned) memory address of the initial memory block of the 1D or 2D region to be prefetched. Another of said source registers may be used to encode the one count defining the 1D region and the two counts defining the 2D region respectively starting from the memory address of the initial memory block, and also the (aforementioned) stride parameter.

Multi-prefetch requests 104, 105 with prefetch-type parameter indicating shared state make prefetch engines 100 according to present disclosure to process them by instructing the cache memory (or controller thereof) to individually prefetch the memory blocks forming the 1D or 2D region in shared state (to permit concurrent read-only operations with no affectation to memory consistency).

Multi-prefetch requests 104, 105 with prefetch-type parameter indicating exclusive state cause prefetch engines 100 according to present disclosure to process them by instructing the cache memory (or controller thereof) to individually prefetch the memory blocks forming the 1D or 2D region in exclusive state (to permit update operations in such a manner that memory coherence is preserved).

The aforementioned stride parameter which, in some examples, may be included in one of the source registers of the RISC-V R-type format, may be a number encoding a stride magnitude. If said number is equal a zero, this may mean that the individual prefetching of the memory blocks forming the 1D or 2D region is to be performed non-strided. Otherwise, said number greater than zero may correspond to the stride magnitude with which individual prefetching of the memory blocks is to be performed.

The cache memory in the processor system may include a Level 1 (L1) cache corresponding to smallest and fastest type of cache memory. L1 cache may be, e.g., embedded directly into the CPU, allowing it to operate at same or almost same speed as the CPU. In prefetch methods according to present disclosure, any of the instructing of the cache memory by the prefetcher to trigger or delay or interrupt or resume a multi-prefetch request may be or may include instructing the L1 cache accordingly.

As commented in other parts of the disclosure, prefetching rules governing the prefetch engine or prefetcher may be implemented by/through a Finite State Machine (FSM). Method steps/actions and transitions from one another included or includable in prefetch methods according to present disclosure may thus result from execution of said FSM.

Figure 2 is a block diagram schematically illustrating prefetch engines, according to examples, within a memory or memory-related operational environment. As depicted, the memory may include a prefetch engine 100 along with a queue of multi-prefetch requests 200 which have been properly described with respect to Figure 1, and further components that are normally present in a memory or memory-related operational environment. Such other components may include, e.g., a queue of memory access requests 201, a multiplexer 203, a cache controller 204, etc. It is shown in this figure from where inputs to prefetcher 100 may come and to where outputs of prefetcher 100 may go.

Queue of memory access requests 201 may receive any type of memory access requests and keep therein those of the high-priority type 202 and redirect to prefetcher 100 those of low-priority type (i.e., multi-prefetch requests) 104. Prefetcher 100 may enqueue received multi-prefetch requests 104 in queue of multi-prefetch requests 200 where each of said requests 104 may wait for its execution according to dequeue or release policy. This separation of requests into different queues 200, 201 permits prioritizing high-priority memory access requests 202 over multi-prefetch requests 104, such that processing of the latter 104 do not interfere processing of the former 202 and, therefore, performance of the computer system is generally improved.

Queue of memory access requests 201 may output state signal 108 to notify the prefetcher 100 whether some or no high-priority memory access requests 202 are being processed or waiting to be processed. No ongoing or waiting high-priority memory access requests 202 means herein that cache memory is in idle state, and contrary condition means herein that cache memory is in non-idle state. Queue of memory access requests 201 may output new state signal 108 every time cache memory changes from one of the idle and non-idle states to the other.

Multiplexer 203 may be operated depending on whether state signal 108 indicates idle state or non-idle state. **In** case of idle state, multiplexer 203 may be operated to let pass multi-prefetch instruction 107 towards cache controller 204 to instruct the cache to individually prefetch memory blocks as explained with respect to Figure 1. Otherwise (non-idle state), multiplexer 203 may be operated to let pass high-priority memory access request 202 towards cache controller 204 to instruct the cache to perform said high-priority memory access request 202.

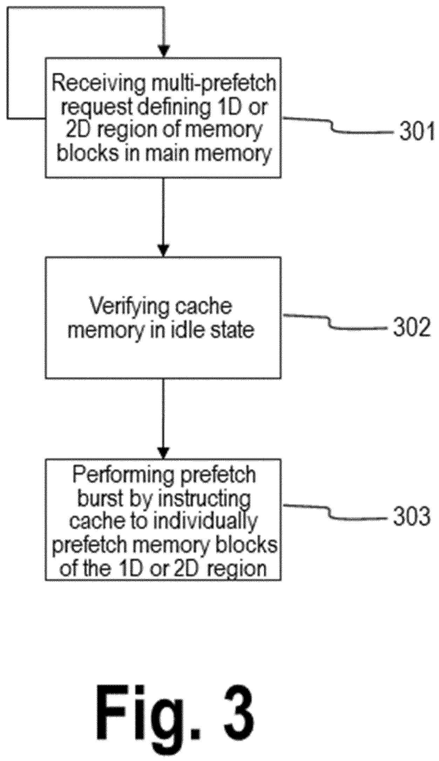

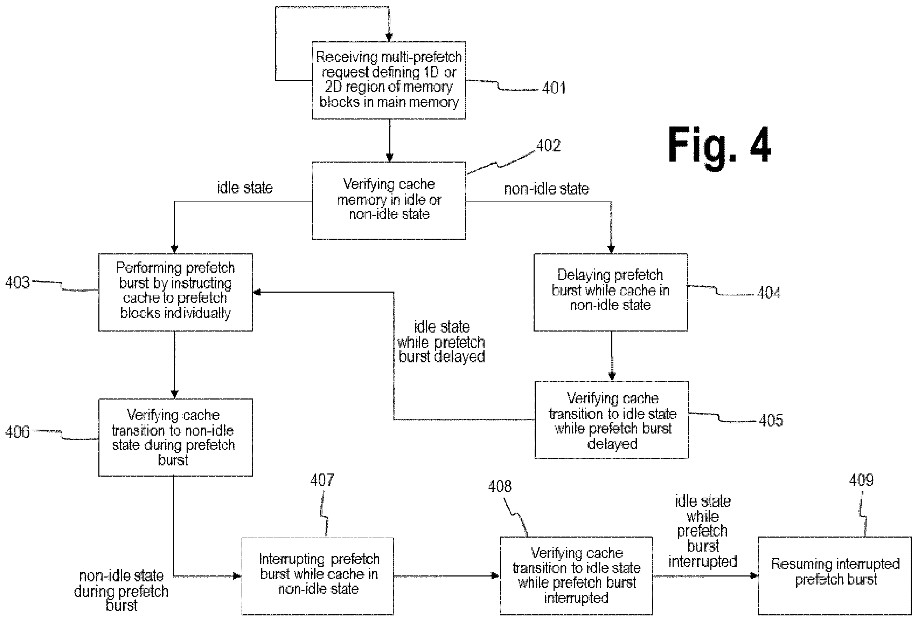

Figures 3 and 4 are flow charts schematically illustrating prefetch methods according to examples. Since such prefetch methods are performable by prefetchers according to Figures 1 and 2, number references from said Figures 1 and 2 may be reused in following description of Figures 3 and 4. Same or similar functional and operational principles and aspects as those explained with reference to Figures 1 and 2 may thus be attributable to prefetch methods according to Figures 3 and 4 with a difference that Figures 1 and 2 represent such principles and aspects from system or prefetcher perspective, whereas Figures 3 and 4 represents them from method or process flow perspective. Figures 3 and 4 illustrates method steps or actions logically connected with arrows denoting execution succession thereof from method/process flow point of view. Such execution successions illustrated in Figures 3 and 4 follow particular orders of execution, respectively, but other logical orders of execution are possible whenever satisfaction of pre- and post-conditions of each involved method step/action are respected.

As shown in Figure 3, prefetch methods may be initiated (e.g., at block 301) with reception, by the prefetch engine 100, of low-priority multi-prefetch request 104 defining 1D or 2D region of memory blocks in main memory. This method-block 301 may be repeatedly performed as represented by "self-pointing" arrow, with origin and destination in same method-block 301, to indicate continuous waiting of multi-prefetch requests 104 which may be enqueued into queue 200 as they are received. This receiving functionality implementable at, e.g., method-block 301 may be performed by, e.g., receiving module 101 previously described with reference to Figure 1. Functional details and considerations explained about said module 101 may thus be similarly attributed to method block 301.

Still with reference to Figure 3, prefetch methods may further include (e.g., at block 302) verifying, by the prefetch engine 100, whether or that cache memory is in idle state because no high-priority memory access requests 202 are being executed or waiting to be executed. This verifying functionality implementable at, e.g., method-block 302 may be performed by, e.g., verifying module 102 previously described with reference to Figure 1. Functional details and considerations explained about said module 102 may thus be similarly attributed to method block 302.

Regarding yet Figure 3, prefetch methods may further include (e.g., at block 303), once it has confirmed that cache is in idle state, triggering by the prefetch engine 100 execution of prefetch burst based on instructing 107 the cache memory controller 204 to individually prefetch memory blocks forming the 1D or 2D region as defined in received multi-prefetch request 104, 105. This triggering or bursting functionality implementable at, e.g., method-block 303 may be performed by, e.g., triggering module 103 previously described with reference to Figure 1. Functional details and considerations explained about said module 103 may thus be similarly attributed to method block 303.

Figure 4 is a flow chart schematically illustrating prefetch methods according to further examples, based on general premises previously explained in relation to both Figures 3 and 4. As illustrated in Figure 4, prefetch methods may be initiated (e.g., at block 401) with reception, by the prefetch engine 100, of low-priority multi-prefetch request 104 defining 1D or 2D region of memory blocks in main memory. Received low-priority multi-prefetch request 104 may be enqueued in queue of multi-prefetch requests 200 to wait for its dequeue or release therefrom and subsequent processing. Method-block 401 may implement continuous waiting of multi-prefetch requests 104 as represented by "self-pointing" arrow, with origin and destination in same method-block 401.

Prefetch methods may continue to verify (e.g., at block 402) whether cache memory is in idle or non-idle state. In case of idle state, performing of prefetch burst may be triggered (e.g., at block 403) by instructing 107 the cache memory controller 204 to individually prefetch memory blocks forming the 1D or 2D region as defined in multi-prefetch request 104, 105. Otherwise (non-idle state), performing of prefetch burst may be delayed (e.g., at block 404) until cache memory changes to idle state. Said switch to idle state may be verified or detected (e.g., at block 405) depending on received state signal 108 and, if multi-prefetch request 104, 105 still remains delayed, its processing may be triggered (e.g., at block 403) by performing corresponding prefetch burst based on instructing 107 the cache memory controller 204 to individually prefetch memory blocks forming the 1D or 2D region as defined in delayed multi-prefetch request 104, 105.

While processing of either delayed or non-delayed multi-prefetch request 104, 105 (triggered at, e.g., block 403) is in progress, if transition by the cache to non-idle state is detected (e.g., at block 406), said performing of the multi-prefetch request 104, 105 may be interrupted (e.g., at block 407) to give max priority to performance of high-priority memory access requests 202.

While processing of multi-prefetch request 104 remains interrupted, if transition by the cache to idle state is detected (e.g., at block 408), said interrupted multi-prefetch request 104 may be resumed (e.g., at block 409) because no high-priority memory access request 202 is being processed and, therefore, interrupted multi-prefetch request (of the low-priority type) 104 is processable without interfering with processing of high-priority memory access requests 202.

As used herein, the term "module" may be understood to refer to software, firmware, hardware and/or various combinations thereof. It is noted that the modules are exemplary. The modules may be combined, integrated, separated, and/or duplicated to support various applications. Also, a function described herein as being performed by a particular module may be performed by one or more other modules and/or by one or more other devices instead of or in addition to the function performed by the described particular module.

The modules may be implemented across multiple devices, associated or linked to corresponding prefetch methods/engines proposed herein, and/or to other components that may be local or remote to one another. Additionally, the modules may be moved from one device and added to another device, and/or may be included in both devices, associated to corresponding prefetch methods/engines proposed herein. Any software implementations may be tangibly embodied in one or more storage media such as, e.g., a memory device, a floppy disk, a compact disk (CD), a digital versatile disk (DVD), or other devices that may store computer code.

The prefetch engines according to present disclosure may be implemented by computing means, electronic means or a combination thereof. The computing means may be a set of instructions (e.g., a computer program) and then the prefetch engines may comprise a memory and a processor, embodying said set of instructions stored in the memory and executable by the processor. These instructions may comprise functionality or functionalities to execute corresponding prefetch methods such as e.g. the ones described in other parts of the disclosure.

In case the prefetch engines are implemented only by electronic means, a controller of the system may be, for example, a CPLD (Complex Programmable Logic Device), an FPGA (Field Programmable Gate Array) or an ASIC (Application-Specific Integrated Circuit).

In case the prefetch engines are a combination of electronic and computing means, the computing means may be a set of instructions (e.g., a computer program) and the electronic means may be any electronic circuit capable of implementing corresponding method-steps of the prefetch methods proposed herein, such as those described in other parts of the disclosure.

The computer program(s) may be embodied on a storage medium (for example, a CD-ROM, a DVD, a USB drive, a computer memory or a read-only memory) or carried on a carrier signal (for example, on an electrical or optical carrier signal).

The computer program(s) may be in the form of source code, object code, a code intermediate source and object code such as in partially compiled form, or in any other form suitable for use in implementing prefetch methods according to present disclosure. The carrier may be any entity or device capable of carrying the computer program(s).

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

When the computer program(s) is/are embodied in a signal that may be conveyed directly by a cable or other device or means, the carrier may be constituted by such cable or other device or means. Alternatively, the carrier may be an integrated circuit in which the computer program(s) is/are embedded, the integrated circuit being adapted for performing, or for use in the performance of, prefetch methods proposed herein.

The invention is set out in the appended independent claims. Advantageous embodiments are defined by the appended dependent claims.

## Claims

1. A method of prefetching memory blocks in a processor system comprising a processor and a memory including a main memory, a cache memory and a prefetch engine implementing prefetching rules; wherein
two types of memory access requests are executable at the memory: a low-priority type including multi-prefetch requests and a high-priority type corresponding to memory access requests other than the multi-prefetch requests; **characterized in that** the method comprises:
receiving (301), by the prefetch engine according to the prefetching rules, a multi-prefetch request of the low-priority type defining a one-dimensional, 1D, or two-dimensional, 2D, region of memory blocks in the main memory;
verifying (302), by the prefetch engine according to the prefetching rules, whether the cache memory is in idle state, wherein idle state refers to that no memory access request of the high-priority type is being executed or waiting to be executed, and non-idle state refers to that some memory access request of the high-priority type is being executed or waiting to be executed; and
if the cache memory is in the idle state: triggering (303), by the prefetch engine according to the prefetching rules, performance of a prefetch burst by instructing a controller of the cache memory to individually prefetch the memory blocks forming the 1D or 2D region as defined in the received multi-prefetch request.

2. A method of prefetching memory blocks according to claim 1, further comprising:
if the cache memory is in the non-idle state: delaying, by the prefetch engine according to the prefetching rules, the performing of the prefetch burst.

3. A method of prefetching memory blocks according to claim 2, further comprising:
verifying, by the prefetch engine according to the prefetching rules, whether the cache memory transitions from the non-idle state to the idle state while the performing of the prefetch burst remains delayed and, in said case, triggering the delayed performing of the prefetch burst.

4. A method of prefetching memory blocks according to any of claims 1 to 3, further comprising:
verifying, by the prefetch engine according to the prefetching rules, whether the cache memory transitions from the idle state to the non-idle state during the performing of the prefetch burst and, in said case, interrupting the performing of the prefetch burst.

5. A method of prefetching memory blocks according to claim 4, further comprising:
verifying, by the prefetch engine according to the prefetching rules, whether the cache memory transitions from the non-idle state to the idle state while the performing of the prefetch burst remains interrupted and, in said case, resuming the interrupted performing of the prefetch burst.

6. A method of prefetching memory blocks according to any of claims 1 to 5, further comprising:
enqueuing, by the prefetch engine according to the prefetching rules, the received multi-prefetch request in a queue of multi-prefetch requests in which the received multi-prefetch request remains stored until it is released according to a release policy implemented at/by the queue.

7. A method of prefetching memory blocks according to claim 6, wherein the release policy is or includes a FIFO queue policy, or a LIFO queue policy, or a circular buffer policy, or a double-ended queue policy, or a priority queue policy, or any combination thereof.

8. A method of prefetching memory blocks according to any of claims 1 to 7, wherein the multi-prefetch requests further define a prefetch-type parameter indicating multi-prefetch in shared state or in exclusive state; and wherein the instructing of the controller of the cache memory to individually prefetch the memory blocks includes:
instructing, by the prefetch engine according to the prefetching rules, the controller of the cache memory to individually prefetch the memory blocks in shared state or in exclusive state as defined by the prefetch-type parameter.

9. A method of prefetching memory blocks according to any of claims 1 to 8, wherein the multi-prefetch requests further define a stride parameter indicating whether the multi-prefetch is strided and with which stride magnitude; and wherein the instructing of the controller of the cache memory to individually prefetch the memory blocks includes:
instructing, by the prefetch engine according to the prefetching rules, the controller of the cache memory to individually prefetch the memory blocks strided or non-strided and, in case of strided, with which stride magnitude, as defined by the stride parameter.

10. A method of prefetching memory blocks according to any of claims 1 to 9, wherein the instructing of the controller of the cache memory to individually prefetch the memory blocks includes:
instructing, by the prefetch engine according to the prefetching rules, the controller of the cache memory to individually prefetch the memory blocks in a L1 cache memory included in the cache memory.

11. A method of prefetching memory blocks according to any of claims 1 to 10, wherein the prefetching rules are implemented by/through a Finite State Machine, FSM.

12. A method of prefetching memory blocks according to any of claims 1 to 11, wherein the multi-prefetch requests have a RISC-V R-type format with two source registers and one destination register, wherein the two source registers are used by the multi-prefetch requests.

13. A method of prefetching memory blocks according to claim 12, wherein a first of the two source registers is used to encode a memory address of an initial memory block of the 1D or 2D region, and a second of the two source registers is used to encode a horizontal count, a vertical count and a stride magnitude; and wherein
the 1D region of memory blocks is defined by the memory address of the initial memory block and one of the horizontal count and the vertical count, and the 2D region of memory blocks is defined by the memory address of the initial memory block and the horizontal count and the vertical count.

14. A computer program comprising program instructions adapted to perform a method according to any of claims 1 to 13 of prefetching memory blocks in a processor system when said computer program is run on a computer.

15. A prefetch engine (100) for prefetching memory blocks in a processor system comprising a processor and a memory including a main memory, a cache memory and the prefetch engine which implements prefetching rules; wherein
two types of memory access requests are executable at the memory: a low-priority type including multi-prefetch requests and a high-priority type corresponding to memory access requests other than the multi-prefetch requests; **characterized in that** the prefetch engine comprises:
a receiving module (101) configured to receive, according to the prefetching rules, a multi-prefetch request of the low-priority type defining a one-dimensional, 1D, or two-dimensional, 2D, region of memory blocks in the main memory;
a verifying module (102) configured to verify, according to the prefetching rules, whether the cache memory is in idle state, wherein idle state refers to that no memory access request of the high-priority type is being executed or waiting to be executed, and non-idle state refers to that some memory access request of the high-priority type is being executed or waiting to be executed; and
a triggering module (103) configured in such a manner that, if the cache memory is in the idle state, performance of a prefetch burst is triggered according to the prefetching rules, said performing of the prefetch burst including instructing a controller of the cache memory to individually prefetch the memory blocks forming the 1D or 2D region as defined in the received multi-prefetch request.

## Patentansprüche

1. Ein Verfahren zum Vorabrufen von Speicherblöcken in einem Prozessorsystem umfassend einen Prozessor und einen Speicher, der einen Hauptspeicher, einen Cache-Speicher und eine Vorabruf-Engine umfasst, die Vorabrufregeln implementiert; wobei
zwei Arten von Speicherzugriffsanforderungen am Speicher ausführbar sind: eine Art mit niedriger Priorität, die Mehrfachvorabrufanforderungen umfasst, und eine Art mit hoher Priorität, die anderen Speicherzugriffsanforderungen als den Mehrfachvorabrufanforderungen entspricht; **dadurch gekennzeichnet, dass** das Verfahren Folgendes umfasst:
Empfangen (301), durch die Vorabruf-Engine gemäß den Vorabrufregeln, einer Mehrfachvorabrufanforderung der Art mit niedriger Priorität, die einen eindimensionalen, 1D, oder zweidimensionalen, 2D, Bereich von Speicherblöcken im Hauptspeicher definiert;
Überprüfen (302) durch die Vorabruf-Engine gemäß den Vorabrufregeln, ob sich der Cache-Speicher im Ruhezustand befindet, wobei sich der Ruhezustand darauf bezieht, dass keine Speicherzugriffsanforderung der Art mit hoher Priorität ausgeführt wird oder auf ihre Ausführung wartet, und sich der Nicht-Ruhezustand darauf bezieht, dass eine Speicherzugriffsanforderung der Art mit hoher Priorität ausgeführt wird oder auf ihre Ausführung wartet; und
falls sich der Cache-Speicher im Ruhezustand befindet: Auslösen (303) der Durchführung eines Vorabruf-Bursts durch die Vorabruf-Engine gemäß den Vorabrufregeln, indem eine Steuerung des Cache-Speichers angewiesen wird, die Speicherblöcke, die den in der empfangenen Mehrfachvorabrufanforderung definierten 1D- oder 2D-Bereich bilden, einzeln vorabzurufen.

2. Ein Verfahren zum Vorabrufen von Speicherblöcken nach Anspruch 1, ferner umfassend:
wenn sich der Cache-Speicher im Nicht-Ruhezustand befindet: Verzögern des Durchführens des Vorabruf-Bursts durch die Vorabruf-Engine gemäß den Vorabrufregeln.

3. Ein Verfahren zum Vorabrufen von Speicherblöcken nach Anspruch 2, ferner umfassend:
Überprüfen durch die Vorabruf-Engine gemäß den Vorabrufregeln, ob der Cache-Speicher vom Nicht-Ruhezustand in den Ruhezustand übergeht, während die Durchführung des Vorabruf-Bursts verzögert bleibt, und in diesem Fall Auslösen der verzögerten Durchführung des Vorabruf-Bursts.

4. Ein Verfahren zum Vorabrufen von Speicherblöcken nach einem der Ansprüche 1 bis 3, ferner umfassend:
Überprüfen durch die Vorabruf-Engine gemäß den Vorabrufregeln, ob der Cache-Speicher während der Ausführung des Vorabruf-Bursts vom Ruhezustand in den Nicht-Ruhezustand übergeht und, in diesem Fall, Unterbrechen der Ausführung des Vorabruf-Bursts.

5. Ein Verfahren zum Vorabrufen von Speicherblöcken nach Anspruch 4, ferner umfassend:
Überprüfen durch die Vorabruf-Engine gemäß den Vorabrufregeln, ob der Cache-Speicher vom Nicht-Ruhezustand in den Ruhezustand übergeht, während die Durchführung des Vorabruf-Bursts unterbrochen bleibt und, in diesem Fall, Wiederaufnehmen der unterbrochenen Durchführung des Vorabruf-Bursts.

6. Ein Verfahren zum Vorabrufen von Speicherblöcken nach einem der Ansprüche 1 bis 5, ferner umfassend:
Einreihen der empfangenen Mehrfachvorabrufanforderung durch die Vorabruf-Engine gemäß den Vorabrufregeln in eine Warteschlange von Mehrfachvorabrufanforderungen, worin die empfangene Mehrfachvorabrufanforderung gespeichert bleibt, bis sie gemäß einer in der/durch die Warteschlange implementierten Freigaberichtlinie freigegeben wird.

7. Ein Verfahren zum Vorabrufen von Speicherblöcken nach Anspruch 6, wobei die Freigaberichtlinie eine FIFO-Warteschlangenrichtlinie oder eine LIFO-Warteschlangenrichtlinie oder eine Ringpuffer-Richtlinie oder eine doppelseitige Warteschlangenrichtlinie oder eine Prioritätswarteschlangenrichtlinie oder eine Kombination davon ist oder umfasst.

8. Ein Verfahren zum Vorabrufen von Speicherblöcken nach einem der Ansprüche 1 bis 7, wobei die Mehrfachvorabrufanforderungen ferner einen Vorabruf-Typ-Parameter definieren, der auf Mehrfachvorabruf im gemeinsam genutzten Zustand oder im exklusiven Zustand hinweist; und wobei das Anweisen der Steuerung des Cache-Speichers, die Speicherblöcke einzeln vorabzurufen, Folgendes umfasst:
Anweisen der Steuerung des Cache-Speichers durch die Vorabruf-Engine gemäß den Vorabrufregeln, die Speicherblöcke einzeln im gemeinsam genutzten Zustand oder im exklusiven Zustand, wie durch den Vorabruf-Typ-Parameter definiert, vorabzurufen.

9. Ein Verfahren zum Vorabrufen von Speicherblöcken nach einem der Ansprüche 1 bis 8, wobei die Mehrfachvorabrufanforderungen ferner einen Schrittabstandsparameter definieren, der darauf hinweist, ob der Mehrfachvorabruf einen festen Schrittabstand und in welcher Schrittabstandsgröße aufweist; und wobei die Anweisung an die Steuerung des Cache-Speichers, die Speicherblöcke einzeln vorabzurufen, Folgendes umfasst:
Anweisen der Steuerung des Cache-Speichers durch die Vorabruf-Engine gemäß den Vorabrufregeln, die Speicherblöcke mit festem Schrittabstand oder ohne festen Schrittabstand einzeln vorabzurufen und, im Falles eines festen Schrittabstands, mit welcher Schrittabstandsgröße, wie durch den Schrittabstandsparameter definiert, vorabzurufen.

10. Ein Verfahren zum Vorabrufen von Speicherblöcken nach einem der Ansprüche 1 bis 9, wobei das Anweisen der Steuerung des Cache-Speichers, die Speicherblöcke einzeln vorabzurufen, Folgendes umfasst:
Anweisen der Steuerung des Cache-Speichers durch die Vorabruf-Engine gemäß den Vorabrufregeln, die Speicherblöcke in einem im Cache-Speicher enthaltenen L1-Cache-Speicher einzeln vorabzurufen.

11. Ein Verfahren zum Vorabrufen von Speicherblöcken nach einem der Ansprüche 1 bis 10, wobei die Vorabrufregeln durch/über eine endliche Zustandsmaschine (englisch: *finite state machine*, FSM) implementiert werden.

12. Ein Verfahren zum Vorabrufen von Speicherblöcken nach einem der Ansprüche 1 bis 11, wobei die Mehrfachvorabrufanforderungen ein RISC-V-R-Typ-Format mit zwei Quellregistern und einem Zielregister haben, wobei die beiden Quellregister durch die Mehrfachvorabrufanforderungen verwendet werden.

13. Ein Verfahren zum Vorabrufen von Speicherblöcken nach Anspruch 12, wobei ein erstes der beiden Quellregister verwendet wird, um eine Speicheradresse eines anfänglichen Speicherblocks des 1D- oder 2D-Bereichs zu codieren, und ein zweites der beiden Quellregister verwendet wird, um eine horizontale Zählung, eine vertikale Zählung und eine Schrittabstandsgröße zu codieren; und wobei
der 1D-Bereich von Speicherblöcken durch die Speicheradresse des anfänglichen Speicherblocks und eine der horizontalen Zählung und der vertikalen Zählung definiert ist, und der 2D-Bereich von Speicherblöcken durch die Speicheradresse des anfänglichen Speicherblocks und die horizontale Zählung und die vertikale Zählung definiert ist.

14. Ein Computerprogramm, das Programmanweisungen umfasst, die dazu ausgelegt sind, ein Verfahren nach einem der Ansprüche 1 bis 13 zum Vorabrufen von Speicherblöcken in einem Prozessorsystem auszuführen, wenn das Computerprogramm auf einem Computer ausgeführt wird.

15. Eine Vorabruf-Engine (100) zum Vorabrufen von Speicherblöcken in einem Prozessorsystem umfassend einen Prozessor und einen Speicher, der einen Hauptspeicher, einen Cache-Speicher und die Vorabruf-Engine enthält, welche Vorabrufregeln implementiert; wobei
zwei Arten von Speicherzugriffsanforderungen am Speicher ausführbar sind: eine Art mit niedriger Priorität, die Mehrfachvorabrufanforderungen umfasst, und eine Art mit hoher Priorität, die anderen Speicherzugriffsanforderungen als den Mehrfachvorabrufanforderungen entspricht; **dadurch gekennzeichnet, dass** die Vorabruf-Engine Folgendes umfasst:
ein Empfangsmodul (101), das dazu konfiguriert ist, gemäß den Vorabrufregeln eine Mehrfachvorabrufanforderung der Art mit niedriger Priorität zu empfangen, die einen eindimensionalen, 1D-, oder zweidimensionalen, 2D-Bereich von Speicherblöcken in dem Hauptspeicher definiert;
ein Überprüfungsmodul (102), das dazu ausgelegt, gemäß den Vorabrufregeln zu überprüfen, ob sich der Cache-Speicher im Ruhezustand befindet, wobei sich der Ruhezustand darauf bezieht, dass keine Speicherzugriffsanforderung von der Art mit hoher Priorität ausgeführt wird oder auf ihre Ausführung wartet, und sich der Nicht-Ruhezustand darauf bezieht, dass eine Speicherzugriffsanforderung von der Art mit hoher Priorität ausgeführt wird oder auf ihre Ausführung wartet; und
ein Auslösemodul (103), das so konfiguriert ist, dass, wenn sich der Cache-Speicher im Ruhezustand befindet, die Durchführung eines Vorabruf-Bursts gemäß den Vorabrufregeln ausgelöst wird, wobei die Durchführung des Vorabruf-Bursts das Anweisen einer Steuerung des Cache-Speichers umfasst, die Speicherblöcke, die den 1D- oder 2D-Bereich bilden, wie in der empfangenen Mehrfachvorabrufanforderung definiert, einzeln vorzurufen.

## Revendications

1. Un procédé de préchargement de blocs de mémoire dans un système de processeur comprenant un processeur et une mémoire incluant une mémoire principale, une mémoire cache et un moteur de préchargement mettant en œuvre des règles de préchargement ; dans lequel
deux types de requêtes d'accès à la mémoire sont exécutables au niveau de la mémoire : un type à faible priorité comprenant des requêtes de préchargement multiple et un type à haute priorité correspondant à des requêtes d'accès à la mémoire autres que les requêtes de préchargement multiple ; **caractérisé en ce que** le procédé comprend :
la réception (301), par le moteur de préchargement conformément aux règles de préchargement, d'une requête de préchargement multiple de type à faible priorité définissant une région unidimensionnelle, 1D, ou bidimensionnelle, 2D, de blocs de mémoire dans la mémoire principale ;
vérifier (302), par le moteur de préchargement conformément aux règles de préchargement, si la mémoire cache est à l'état en repos, dans lequel l'état en repos désigne le fait qu'aucune requête d'accès à la mémoire de type à haute priorité n'est en cours d'exécution ou en attente d'exécution, et l'état non en repos désigne le fait qu'une requête d'accès à la mémoire de type à haute priorité est en cours d'exécution ou en attente d'exécution ; et
si la mémoire cache est à l'état en repos : déclencher (303), par le moteur de préchargement conformément aux règles de préchargement, l'exécution d'une rafale de préchargement en ordonnant à un contrôleur de la mémoire cache de précharger individuellement les blocs de mémoire formant la région 1D ou 2D telle que définie dans la requête de préchargement multiple reçue.

2. Un procédé de préchargement de blocs de mémoire selon la revendication 1, comprenant en outre :
si la mémoire cache est à l'état non en repos : retarder, par le moteur de préchargement conformément aux règles de préchargement, l'exécution de la rafale de préchargement.

3. Un procédé de préchargement de blocs de mémoire selon la revendication 2, comprenant en outre :
vérifier, par le moteur de préchargement selon les règles de préchargement, si la mémoire cache passe de l'état non en repos à l'état en repos alors que l'exécution de la rafale de préchargement reste retardée et, dans ce cas, déclencher l'exécution retardée de la rafale de préchargement.

4. Un procédé de préchargement de blocs de mémoire selon l'une quelconque des revendications 1 à 3, comprenant en outre :
vérifier, par le moteur de préchargement selon les règles de préchargement, si la mémoire cache passe de l'état en repos à l'état non en repos pendant l'exécution de la rafale de préchargement et, dans ce cas, interrompre l'exécution de la rafale de préchargement.

5. Un procédé de préchargement de blocs de mémoire selon la revendication 4, comprenant en outre :
vérifier, par le moteur de préchargement selon les règles de préchargement, si la mémoire cache passe de l'état non en repos à l'état en repos alors que l'exécution de la rafale de préchargement reste interrompue et, dans ce cas, reprendre l'exécution interrompue de la rafale de préchargement.

6. Un procédé de préchargement de blocs de mémoire selon l'une quelconque des revendications 1 à 5, comprenant en outre :
mise en file d'attente, par le moteur de préchargement conformément aux règles de préchargement, de la requête de préchargement multiple reçue dans une file d'attente de requêtes de préchargement multiple, dans lequel la requête de préchargement multiple reçue reste stockée jusqu'à ce qu'elle soit libérée conformément à une politique de libération mise en œuvre dans/par la file d'attente.

7. Un procédé de préchargement de blocs de mémoire selon la revendication 6, dans lequel la politique de libération est ou comprend une politique de file d'attente FIFO, ou une politique de file d'attente LIFO, ou une politique de tampon circulaire, ou une politique de file d'attente à double extrémité, ou une politique de file d'attente prioritaire, ou une quelconque combinaison de celles-ci.

8. Un procédé de préchargement de blocs de mémoire selon l'une quelconque des revendications 1 à 7, dans lequel les demandes de préchargement multiple définissent en outre un paramètre de type préchargement indiquant une préchargement multiple dans un état partagé ou dans un état exclusif ; et dans lequel l'instruction du contrôleur de la mémoire cache de préchargement individuelle des blocs de mémoire comprend :
l'instruction, par le moteur de préchargement selon les règles de préchargement, au contrôleur de la mémoire cache de précharger individuellement les blocs de mémoire en état partagé ou en état exclusif, tel que défini par le paramètre de type de préchargement.

9. Un procédé de préchargement de blocs de mémoire selon l'une quelconque des revendications 1 à 8, dans lequel les requêtes de préchargement multiple définissent en outre un paramètre de pas indiquant si la préchargement multiple est à pas régulier et avec quelle amplitude de pas ; et dans lequel l'instruction donnée au contrôleur de la mémoire cache pour précharger individuellement les blocs de mémoire comprend :
l'instruction, par le moteur de préchargement selon les règles de préchargement, au contrôleur de la mémoire cache de précharger individuellement les blocs de mémoire à pas régulier ou sans motif de pas, et, si les pas est régulier, avec quelle amplitude de pas, telle que définie par le paramètre de pas.

10. Un procédé de préchargement de blocs de mémoire selon l'une quelconque des revendications 1 à 9, dans lequel, l'instruction donnée au contrôleur de la mémoire cache pour précharger individuellement les blocs de mémoire comprend :
l'instruction, par le moteur de préchargement selon les règles de préchargement, au contrôleur de la mémoire cache de précharger individuellement les blocs de mémoire dans une mémoire cache L1 incluse dans la mémoire cache

11. Un procédé de préchargement de blocs de mémoire selon l'une quelconque des revendications 1 à 10, dans lequel les règles de préchargement sont mises en œuvre par/via une machine à états finis (en anglais : *finite state machine,* FSM).

12. Un procédé de préchargement de blocs de mémoire selon l'une quelconque des revendications 1 à 11, dans lequel les requêtes de préchargement multiple ont un format de type RISC-V R avec deux registres source et un registre de destination, dans lequel les deux registres source sont utilisés par les requêtes de préchargement multiple.

13. Un procédé de préchargement de blocs de mémoire selon la revendication 12, dans lequel un premier des deux registres source est utilisé pour coder une adresse de mémoire d'un bloc de mémoire initial de la région 1D ou 2D, et un second des deux registres source est utilisé pour coder un compte horizontal, un compte vertical et une amplitude de pas ; et dans lequel
la région 1D des blocs de mémoire est définie par l'adresse de mémoire du bloc de mémoire initial et l'un du compte horizontal et du compte vertical, et la région 2D des blocs de mémoire est définie par l'adresse de mémoire du bloc de mémoire initial et du compte horizontal et du compte vertical.

14. Un programme informatique comprenant des instructions de programme adaptées pour mettre en œuvre un procédé selon l'une quelconque des revendications 1 à 13 de préchargement de blocs de mémoire dans un système de processeur lorsque ledit programme informatique est exécuté sur un ordinateur.

15. Un moteur de préchargement (100) destiné à précharger des blocs de mémoire dans un système de processeur comprenant un processeur et une mémoire comprenant une mémoire principale, une mémoire cache et le moteur de préchargement qui met en œuvre des règles de préchargement ; dans lequel
deux types de requêtes d'accès à la mémoire sont exécutables au niveau de la mémoire : un type à faible priorité comprenant des requêtes de préchargement multiple et un type à haute priorité correspondant à des requêtes d'accès à la mémoire autres que les requêtes de préchargement multiple ; **caractérisé en ce que** le moteur de préchargement comprend :
un module de réception (101) configuré pour recevoir, selon les règles de préchargement, une demande de préchargement multiple du type à faible priorité définissant une région unidimensionnelle, 1D, ou bidimensionnelle, 2D, de blocs de mémoire dans la mémoire principale ;
un module de vérification (102) configuré pour vérifier, conformément aux règles de préchargement, si la mémoire cache est à l'état de repos, dans lequel l'état de repos désigne le fait qu'aucune requête d'accès à la mémoire de type à haute priorité n'est en cours d'exécution ou en attente d'exécution, et l'état non en repos désigne le fait qu'une requête d'accès à la mémoire de type à haute priorité est en cours d'exécution ou en attente d'exécution ; et
un module de déclenchement (103) configuré de telle manière que, si la mémoire cache est dans l'état en repos, l'exécution d'une rafale de préchargement est déclenchée conformément aux règles de préchargement, ladite exécution de la rafale de préchargement comprenant donner instruction à un contrôleur de la mémoire cache de précharger individuellement les blocs de mémoire formant la région 1D ou 2D telle que définie dans la requête de préchargement multiple reçue.
